Europäisches Patentamt

European Patent Office

Office européen des brevets

(19)

(11) Numéro de publication : **0 022 688**
**B1**

(12)

# FASCICULE DE BREVET EUROPÉEN

(45) Date de publication du fascicule du brevet :
**13.07.83**

(21) Numéro de dépôt : **80400854.8**

(22) Date de dépôt : **13.06.80**

(51) Int. Cl.³ : **B 23 P 13/04// B23P15/10**

(54) **Procédé pour la fabrication d'un piston et pistons en résultant.**

(30) Priorité : **03.07.79 FR 7917188**

(43) Date de publication de la demande :
**21.01.81 Bulletin 81/03**

(45) Mention de la délivrance du brevet :
**13.07.83 Bulletin 83/28**

(84) Etats contractants désignés :
**AT BE CH DE GB IT LI LU NL SE**

(56) Documents cités :
**DE C 499 628**
**FR A 1 518 064**
**US A 3 156 160**
**US A 4 030 179**

(73) Titulaire : **Gachot, Jean**
**26 bis, avenue de Paris**
**F-95230 Soisy sous Montmorency (FR)**

(72) Inventeur : **Gachot, Jean**
**26 bis, avenue de Paris**
**F-95230 Soisy sous Montmorency (FR)**

(74) Mandataire : **Bouju, André**
**38 Avenue de la Grande Armée**
**F-75017 Paris (FR)**

EP 0 022 688 B1

Procédé pour la fabrication d'un piston et pistons en résultant.

L'invention concerne un procédé pour la fabrication d'un piston, notamment tel que ceux employés dans les actionneurs à fluide sous pression destinés à la télécommande des robinets, vannes ou analogues. L'invention vise également à titre de produits industriels nouveaux, les pistons obtenus par le procédé précité.

Les pistons du genre visé par l'invention comprennent le plus souvent une tête dont le pourtour assure le guidage dans le cylindre de l'actionneur. Cette tête est rendue solidaire de moyens pour transmettre le mouvement du piston à un arbre de sortie disposé transversalement au cylindre.

C'est le cas notamment des pistons à crémaillère, dans lesquels une queue de piston est fixée à la tête et porte une crémaillère disposée longitudinalement par rapport à l'axe de la tête pour engrener avec un pignon calé sur l'arbre de sortie transversal.

Ces pistons, dits simples, sont généralement montés par paire en opposition dans le même cylindre engrenant avec un pignon unique.

L'invention s'applique aussi à la fabrication des pistons doubles du genre visé dans le brevet US.A. 3 156 160.

Un tel piston double comprend deux têtes reliées entre elles par au moins une entretoise portant la crémaillère disposée longitudinalement.

Pour fabriquer notamment les pistons simples tels que définis plus haut, il est connu de fabriquer par forgeage ou moulage, une ébauche qu'on usine ensuite pour engendrer les différentes surfaces d'appui, de guidage, de maintien des joints, ainsi que la crémaillère.

Ce procédé est long, coûteux et peu rentable dans le cadre d'une fabrication en grande série.

Le but de la présente invention est de remédier à ces inconvénients en proposant un procédé pour la fabrication de pistons qui soit rapide, économique, et particulièrement avantageux dans le cadre d'une fabrication en grande série.

L'invention vise un procédé pour la fabrication d'un piston, notamment pour actionneur de vannes et analogues. Ce piston comprend au moins une tête et au moins un organe de transmission s'étendant transversalement par rapport à la tête.

Suivant l'invention, le procédé est caractérisé en ce qu'on part d'un profilé en barre dont le profil enveloppe pour l'essentiel celui du piston, en ce qu'on découpe en tranches ce profilé, la largeur de chaque tranche étant au moins égale au diamètre maximum du piston et en ce qu'on élimine par usinage la matière de la tranche de profilé qui déborde relativement au profil désiré pour le piston.

Ainsi, les surfaces souvent complexes et difficiles à usiner délimitant le profil du piston sont ici obtenues directement, ou au moins ébauchées, par extrusion, tandis que les surfaces de révolution autour de l'axe de la tête résultent d'une simple opération peu coûteuse d'usinage, par exemple de tournage.

Ce procédé simplifie donc considérablement les opérations d'usinage nécessaires pour fabriquer le piston, et dispense en outre de forger ou de mouler une ébauche initiale, celle-ci étant obtenue conformément à l'invention par tronçonnage du profilé.

Il revient au Demandeur le mérite d'avoir mis au point un procédé particulièrement économique que l'homme de l'art aurait été dissuadé de mettre en œuvre, car il implique un enlèvement de matière relativement important au tournage, et paraît donc a priori coûteux, mais aussi et surtout car il est contraire aux enseignements habituels de fabriquer, à partir d'un profilé, des pièces dont l'axe principal est perpendiculaire à la direction d'extrusion.

Suivant un autre objet, l'invention vise un piston fabriqué notamment selon le procédé ci-dessus, ce piston comprenant une tête à laquelle est relié rigidement un organe de transmission s'étendant transversalement à la tête et portant une crémaillère dont les dents sont transversales à l'axe de la tête, caractérisé en ce que la crémaillère, l'organe de transmission et la tête sont formés à partir d'une seule pièce profilée, et en ce que les dents de la crémaillère sont brutes d'extrusion.

Ce piston à crémaillère est particulièrement simple et puisqu'il est ainsi pour l'essentiel réalisé en une seule pièce.

Suivant un troisième objet, l'invention vise un piston fabriqué notamment selon le procédé ci-dessus, ce piston comprenant deux têtes opposées reliées entre elles par deux entretoises dont l'une porte une crémaillère dont les dents, transversales à l'axe des têtes, sont dirigées vers l'autre entretoise, caractérisé en ce que la crémaillère, les têtes et les entretoises sont formées à partir d'une seule pièce profilée.

Ainsi, le piston peut être léger et court, ce qui conforte les avantages de faible encombrement des actionneurs qui en sont munis.

D'autres particularités et avantages de l'invention ressortiront encore de la description ci-après concernant des exemples non limitatifs de sa mise en œuvre.

Aux dessins annexés :

la Figure 1 est une vue en perspective du profilé en cours d'extrusion ;

la Figure 2 est une vue schématique de la section du profilé ;

la Figure 3 est une vue en perspective du profilé en cours de découpage ;

la Figure 4 est une vue en perspective d'une ébauche de piston double en cours de tournage ;

la Figure 5 est une vue en perspective de l'ébauche après le tournage ;

la Figure 6 est une vue en coupe de l'ébauche après tournage et fraisage ;

les Figures 7 et 8 sont des vues partielles, en perspective et en coupe, de la tête du piston respectivement avant et après montage de l'un des patins de guidage ;

la Figure 9 est une vue en perspective du piston double terminé ;

la Figure 10 est une vue en coupe d'un actionneur à double effet dans lequel est monté le piston ;

la Figure 11 est une vue en perspective d'une variante du piston double ;

la Figure 12 est une vue partielle en perspective d'un profilé destiné à la fabrication de pistons simples par paires ;

la Figure 13 est une vue schématique de la section du profilé de la Figure 12 ;

la Figure 14 est une vue en perspective d'une paire de deux pistons avant séparation ;

la Figure 15 est une vue en perspective de l'un des pistons de la Figure 14, terminé ;

la Figure 16 est une vue en coupe d'un actionneur à double effet dans lequel est montée une paire de pistons obtenus par séparation de ceux de la Figure 14.

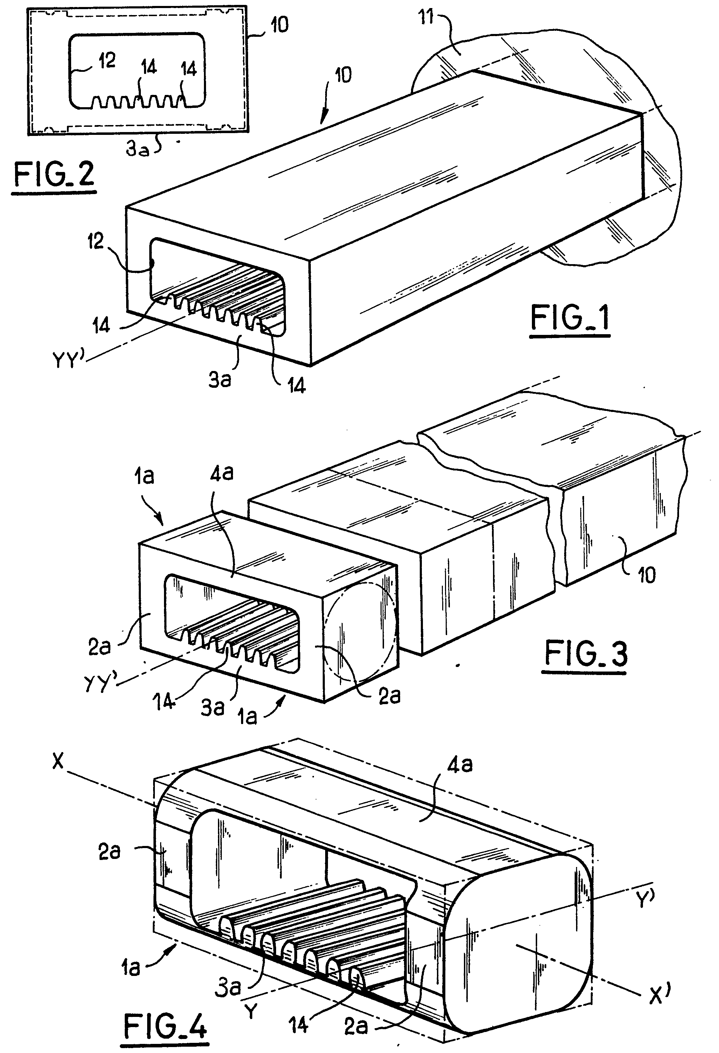

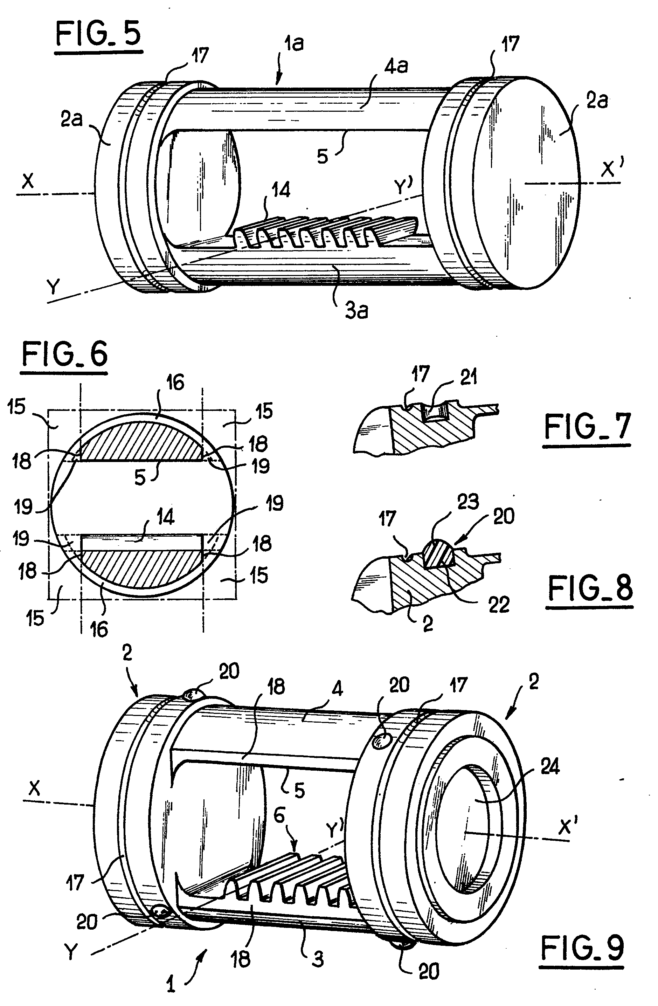

Dans la mise en œuvre des Figures 1 à 10, le procédé concerne la fabrication d'un piston double à crémaillère. Ce piston 1 (Figure 9) comprend deux têtes 2 opposées d'axe commun XX', reliées par deux entretoises 3, 4 transversales aux têtes 2 et définissant entre elles une ouverture 5 sensiblement rectangulaire. L'entretoise 3, qui constitue un organe de transmission du mouvement du piston 1, porte une crémaillère 6 dont les dents font saillie dans l'ouverture 5 vers l'autre entretoise 4. La crémaillère 6 s'étend longitudinalement par rapport à l'axe XX'. Ainsi, le profil de l'ouverture 5, et en particulier celui des dents de la crémaillère 6, est constant le long de la direction YY' de ces dents transversale à l'axe XX'.

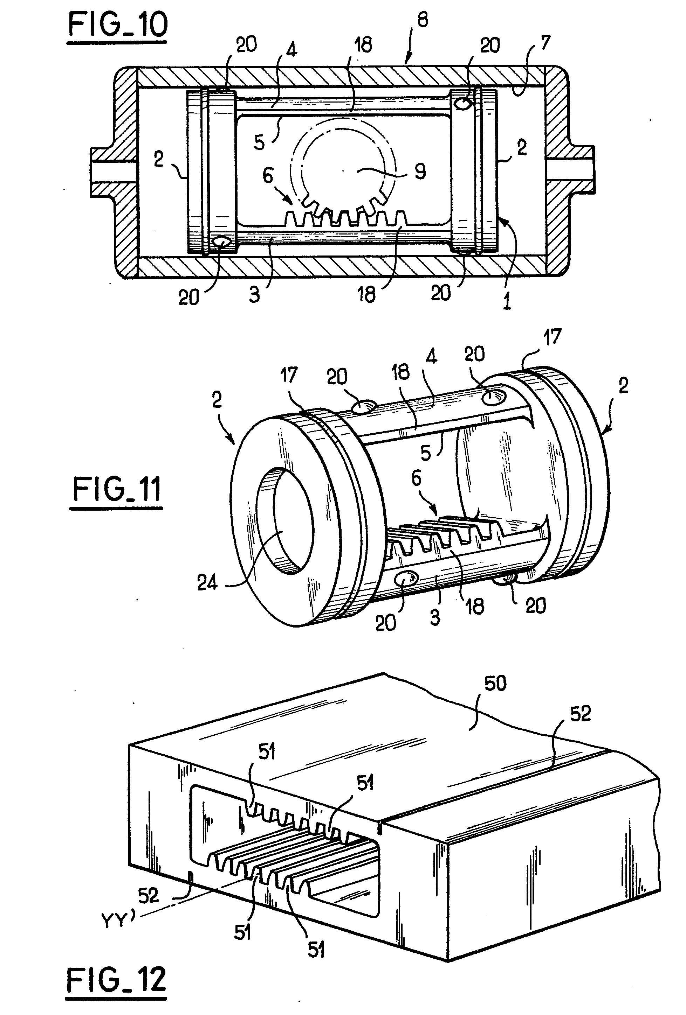

Comme le montre la Figure 10, le piston 1 ainsi constitué peut être monté dans le cylindre 7 d'un actionneur 8, la crémaillère 6 engrenant avec un pignon 9 monté transversalement, selon la direction YY', dans le cylindre 7 et calé sur l'arbre de sortie de l'actionneur 8.

Conformément à l'invention, pour fabriquer le piston 1, on part d'un profilé 10 (Figure 1) obtenu à la sortie d'une extrudeuse 11, et avantageusement constitué d'un métal extrudable tel qu'un alliage d'aluminium. Le profilé 10 est tubulaire, et son profil (en trait plein à la Figure 2), sensiblement rectangulaire, enveloppe le profil du piston 1 (en pointillé à cette Figure), vu selon la direction YY'. En outre, le contour interne 12 du profilé 10 reproduit fidèlement le profil de l'ouverture 5, vue selon la direction YY'. Ainsi, l'une des ailes 3a du profilé 10 porte, sur sa face interne, des dents 14 dont le profil est le même que celui des dents de la crémaillère 6.

On découpe ensuite dans le profilé 1, transversalement à l'axe YY', comme représenté à la Figure 3, une tranche 1a de largeur légèrement supérieure au diamètre de la tête 2 (en pointillé à cette Figure) du piston 1. La tranche 1a, qui constitue une ébauche du piston 1, comporte deux têtes 2a reliées par deux entretoises 3a, 4a.

Comme le montre la Figure 4, on procède ensuite au tournage de l'ébauche 1a par rotation autour de l'axe XX', de manière à usiner aussi bien le pourtour des têtes 2a que la surface extérieure des entretoises 3a, 4a. On confère alors aux têtes 2a un diamètre légèrement supérieur à celui de la surface extérieure des entretoises 3a, 4a (Figure 5).

Le tournage de l'ébauche 1a a conduit à enlever des zones 15 (Figure 6) de matière correspondant chacune à une arête du profilé 10, et deux zones courbes 16 correspondant à la différence de diamètre voulue entre les entretoises 3a, 4a, et les têtes 2a.

On pratique en outre, au cours du tournage, autour de chaque tête 2a, une gorge 17 destinée à recevoir un joint torique d'étanchéité.

Dans une étape ultérieure, on usine par fraisage les bords des entretoises 3a, 4a de chaque côté de l'ouverture 5, selon un plan 18 (Figures 6 et 9) transversal aux dents de la crémaillère 6 et commun aux deux entretoises 3a, 4a. Ainsi, les dents de la crémaillère sont débarrassées des bavures ou échardes résultant du tournage, et les longueurs de leur sommet et de leur base sont rendues identiques. Cet ébavurage a consisté à ôter quatre zones de matière 19 sur les bords longitudinaux des entretoises 3a, 4a (Figure 6).

En vue de munir chaque tête 2 de trois patins de guidage 20 en matière plastique (polytétrafluoréthylène par ex.) répartis sur leur pourtour (Figure 9) entre la rainure 17 et les entretoises 3, 4, on perce à l'aide d'un foret un trou cylindrique borgne 21 à chaque emplacement voulu pour les patins 20 (Figure 7), et on introduit à force, dans chacun des trous 21 (Figure 8), un patin 20 comprenant une embase cylindrique d'ancrage 22 et une tête arrondie de friction 23.

On peut avantageusement faire en sorte, comme représenté à la Figure 9, que les patins 20 de l'une des têtes 2 soient décalés de 60° environ autour de l'axe XX' par rapport à ceux de l'autre tête.

On usine en outre, sur la face frontale de chaque tête 2, un renfoncement cylindrique 24 (Figure 9) centré sur l'axe XX'. Ces renfoncements 24 pourront, par exemple, servir de base d'appui pour un ressort (non représenté) de rappel en position de repos du piston d'un actionneur à simple effet.

Le piston 1 offre de nombreux avantages résultant de sa structure particulière à crémaillère 6 installée dans l'ouverture 5 ménagée entre deux entretoises 3, 4 reliant les deux têtes 2.

Or, la fabrication du piston 1 pose a priori un problème de réalisation de la crémaillère.

Comme on a pu le constater au cours de la description, ce problème est habilement résolu par la présente invention en évitant tout usinage dans l'espace peu accessible de l'ouverture, et en évitant également l'emploi d'une crémaillère rapportée.

Selon une variante de ce procédé, représentée à la figure 11, les patins 20 sont montés, non pas à la périphérie des têtes 2, mais sur les entretoises 3, 4, dans des trous borgnes percés à partir de la surface extérieure de ces dernières au voisinage des têtes 2. La partie bombée de ces patins 20 est alors plus haute pour compenser la différence de diamètre existant entre la surface extérieure des entretoises 3, 4 et les têtes 2.

Il y a trois patins 20 à proximité de chaque tête 2, répartis angulairement autant que le permet la largeur des entretoises 3, 4. De préférence, chacune des entretoises 3, 4 porte un patin 20 à une extrémité et deux à l'autre.

Ainsi, les têtes 2, dont l'épaisseur n'est plus conditionnée par le diamètre des patins 20, peuvent être plus minces, donc plus légères.

Dans le mode de mise en œuvre représenté aux Figures 12 à 16, le procédé conforme à l'invention vise la fabrication d'une paire de pistons simples 41 à crémaillère.

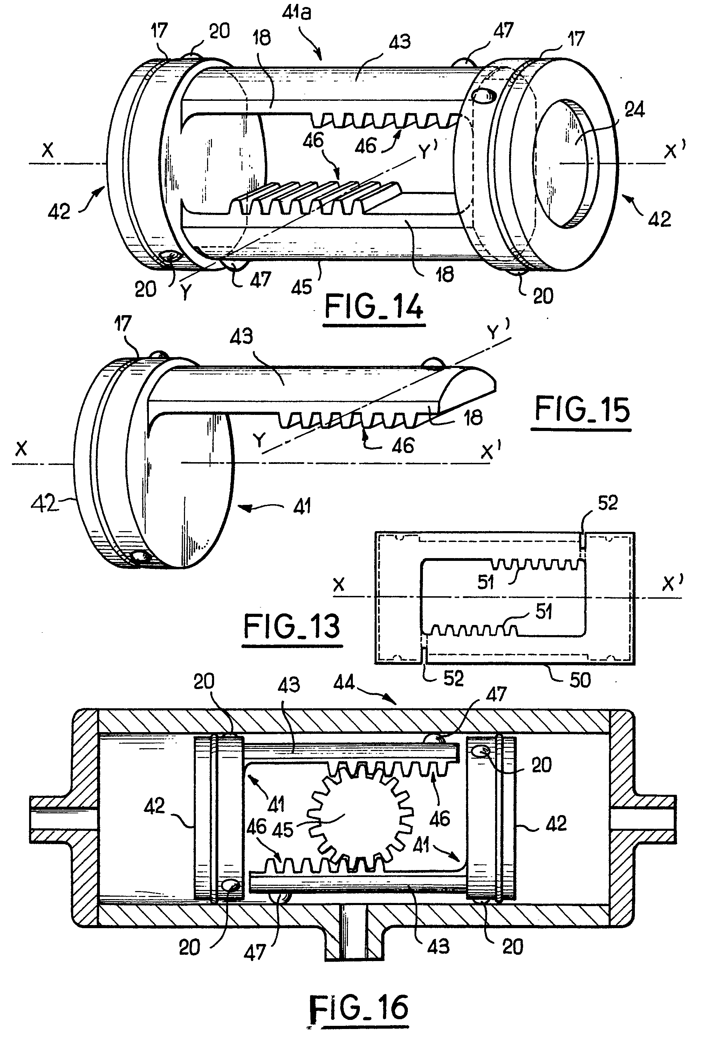

Ces pistons 41 comprennent une tête 42 d'axe XX' (Figure 15) solidaire d'une queue 43 s'étendant longitudinalement par rapport à l'axe XX', mais en dehors de cet axe. Sur sa face dirigée vers l'axe XX', la queue 43, qui constitue un organe de transmission du mouvement du piston 1, porte une crémaillère 46 qui s'étend parallèlement à cet axe, de sorte que ses dents sont transversales à l'axe XX'. Ainsi, le profil de la surface de la queue 43 tournée vers l'axe XX', et notamment des dents de la crémaillère 46, est constant le long de la direction YY' de ces dents.

Les pistons 41 sont généralement associés par paires dans un actionneur 44, comme le montre la Figure 16. Leurs crémaillères 46 engrènent alors de part et d'autre du même pignon 45 calé sur l'arbre de sortie de l'actionneur 44.

Conformément à l'invention, pour fabriquer une paire de pistons 41, on part d'un profilé extrudé tubulaire 50 (Figure 12) dont le profil (en trait plein à la Figure 13), sensiblement rectangulaire, enveloppe le profil (en pointillé à cette Figure), vu selon YY', de deux pistons 41 accolés tête-bêche, avec leurs queues 43 opposées par rapport à l'axe XX'. En outre, le profil de chacune de deux faces internes opposées du profilé 50, munies de dents 51, reproduit fidèlement celui de la face tournée vers l'axe XX' d'une queue 43 avec sa crémaillère 46, tandis que le profil de chacune des deux autres faces internes reproduit fidèlement celui de la face postérieure d'une tête 42.

Le profilé 50 présente encore deux rainures 52 diagonalement opposées qui courent chacune le long d'une arête externe dans le prolongement de l'une des faces internes ne portant pas de dents, ces rainures 52 définissant chacune une ligne selon laquelle l'une des têtes 42 sera ultérieurement séparée de la queue 43 associée à l'autre tête.

On procède ensuite au découpage d'une tranche ou ébauche 41a, à son tournage autour de l'axe XX' et au fraisage des bords des queues 43, et notamment des crémaillères 46, ainsi qu'à la mise en place de patins 20 sur le pourtour des têtes 42, conformément à ce qui a été exposé en référence aux Figures 1 à 10.

Complémentairement, on introduit à force un patin de guidage 47, dont la partie bombée est plus haute que celle des patins 20 des têtes 42, dans un trou borgne percé à partir de la face extérieure de chaque queue 43, à son extrémité opposée à la tête 42 destinée à lui être associée.

On scie ensuite l'ébauche selon chacune des rainures 52, de sorte que les deux pistons 41 sont détachés l'un de l'autre.

Une fois monté dans le corps de l'actionneur 44, chaque piston 41 est guidé au niveau de sa tête 42, à l'aide des trois patins 20, et, au niveau de sa queue 43, entre le pignon 45 et le patin 47.

Dans cette réalisation, le procédé conforme à l'invention est particulièrement économique puisqu'il permet de fabriquer deux pistons identiques à partir d'une seule ébauche sur laquelle on effectue en commun l'essentiel de l'usinage des deux pistons.

Il en résulte, en outre, des conditions de travail améliorées, car l'ébauche, de par sa forme extérieure sensiblement cylindrique, est plus facile à installer sur les machines-outils que les pistons 41.

Bien entendu, l'invention n'est pas limitée aux exemples décrits.

C'est ainsi que l'invention pourrait être appliquée à des pistons très variés tels que des pistons portant une queue terminée par une bague d'axe transversal à l'axe du piston, cette bague étant destinée au couplage du piston avec une bielle, un coulisseau ou analogues.

Dans cette forme d'exécution, la queue et la bague seraient obtenues directement par extrusion.

D'autre part, on pourrait prévoir que les trous borgnes pour les patins soient légèrement étranglés, en vue d'assurer un meilleur maintien des patins.

## Revendications

1. Procédé pour la fabrication d'un piston, notamment pour actionneur de vannes et analogues, ce piston comprenant au moins une tête (2, 42) et au moins un organe, de transmission (3, 43) s'étendant transversalement par rapport à la tête (2, 42), caractérisé en ce qu'on part d'un profilé en barre (10, 50) dont le profil enveloppe pour l'essentiel celui du piston, en ce qu'on découpe ce profilé (10, 50) en tranches (1a), la largeur de chaque tranche (1a) étant au moins égale au diamètre maximum du piston, et en ce qu'on élimine par usinage la matière de la tranche (1a) de profilé (10, 50) qui déborde relativement au profil désiré pour le piston.

2. Procédé conforme à la revendication 1, appliqué à la fabrication de pistons à crémaillère, ce piston comprenant une crémaillère (6, 46) solidaire de l'organe de transmission (3, 43) et disposée longitudinalement par rapport à l'axe (XX') de la tête (2, 42), caractérisé en ce qu'on part d'un profilé (10, 50) dont une aile (3a) porte des dents (14, 51) dont le profil correspond à celui des dents de la crémaillère (6, 46).

3. Procédé conforme à la revendication 2, caractérisé en ce que pour permettre la réalisation d'un piston double, on procède aux opérations suivantes :

— on part d'un profilé tubulaire (10) de section sensiblement rectangulaire, l'une des faces internes de ce tube portant des dents (14) destinées à constituer les dents de la crémaillère (6) ;

— après découpage d'une tranche (1a) de ce profilé, on usine cette tranche (1a) par tournage selon l'axe (XX') parallèle à la direction longitudinale de la crémaillère (6) de façon à constituer une tête (2) de piston dans chaque aile adjacente à celle portant les dents (14).

4. Procédé conforme à la revendication 2, caractérisé en ce que, en vue de fabriquer deux pistons simples, il comprend les étapes suivantes :

— on part d'un profilé (50) ayant sensiblement la forme d'un tube rectangulaire dont deux ailes en regard portent des dents (51) sur leurs faces internes ; et

— après découpage d'une tranche, on usine cette tranche par tournage selon l'axe (XX') parallèle à la direction longitudinale des crémaillères (46), de façon à constituer une tête de piston (42) avec chaque aile ne portant pas de dents (51),

— on coupe la pièce obtenue, transversalement à l'axe de tournage, en deux endroits diagonalement opposés, pour séparer de chaque tête (42) l'une des ailes adjacentes (43) portant une crémaillère (46).

5. Procédé conforme à la revendication 4, caractérisé en ce qu'il comprend les étapes suivantes :

— on part d'un profilé (50) présentant extérieurement deux rainures diagonalement opposées (52), et situées respectivement sur une aile (43) munie de dents (51) et à proximité d'une arête ; et

— après tournage, on scie la pièce tournée selon ces rainures (52) afin de séparer les pistons.

6. Procédé conforme à l'une des revendications 4 ou 5, caractérisé en ce que, après le tournage, on ménage à l'extrémité de l'aile (43) portant les dents (51) opposée à la tête (42) devant lui être associée, et à partir de la face extérieure de cette aile (43), au moins un trou borgne, et en ce qu'on introduit à force dans ce trou borgne un patin de guidage (47) en matière plastique.

7. Procédé conforme à l'une des revendications 2 à 6, caractérisé en ce qu'après tournage, on réalise sur le pourtour de chaque tête (42) trois trous borgnes, et en ce qu'on introduit à force dans chacun de ces trous un patin de guidage (20) en matière plastique.

8. Procédé conforme à la revendication 3, caractérisé en ce qu'après tournage, on ménage, à partir des faces extérieures de l'aile (3, 43) portant les dents (14, 51) et de l'aile opposée, trois trous borgnes répartis à proximité de chaque tête (2, 42), et en ce qu'on introduit à force dans chacun de ces trous borgnes un patin de guidage (20) en matière plastique.

9. Procédé conforme à l'une des revendications 2 à 8, caractérisé en ce que, après tournage, on usine par fraisage les bords latéraux (18) de chaque crémaillère, selon un plan transversal à ses dents (14, 51), en vue de les ébavurer.

10. Procédé conforme à l'une des revendications 1 à 9, caractérisé en ce que, au cours du tournage, on donne au pourtour de chaque tête (2, 42) un diamètre plus important qu'aux ailes (3, 43) transversales aux têtes (2, 42).

11. Procédé conforme à l'une des revendications 1 à 10, caractérisé en ce que, sur la face frontale de chaque tête, on usine un renfoncement cylindrique (24).

12. Piston fabriqué notamment selon un procédé conforme à l'une des revendications 1 à 11, ce piston comprenant une tête (2, 42) à laquelle est relié rigidement un organe de transmission (3, 43) s'étendant transversalement à la tête et portant une crémaillère (6, 46) dont les dents (14, 51) sont transversales à l'axe (XX') de la tête, caractérisé en ce que la crémaillère (6, 46), l'organe de transmission (3, 43) et la tête (2, 42), sont formés à partir d'une seule pièce profilée, et en ce que les dents (14, 51) de la crémaillère (6, 46) sont brutes d'extrusion.

13. Piston fabriqué notamment selon un procédé conforme à l'une des revendications 1 à 3, ce piston comprenant deux têtes (2) opposées reliées entre elles par deux entretoises (3) dont l'une porte une crémaillère (6) dont les dents (14), transversales à l'axe (XX') des têtes (2), sont dirigées vers l'autre entretoise (3), caractérisé en ce que la crémaillère (6), les têtes (2) et les entretoises (3) sont formées à partir d'une seule pièce profilée.

**Claims**

1. Method for the manufacture of a piston, notably for an actuator for valves and the like, said piston comprising at least a head (2, 42) and at least one transmission member (3, 43) extending transversely with respect to the head (2, 42) characterized by starting from a profiled bar (10, 50) whose profile envelops essentially that of the piston, cutting off slices from this profiled element (10, 50), the width of each slice (1a) being at least equal to the maximum diameter of the piston, and removing by machining the material of the profiled element slice (1a) which extends beyond the desired profile for the piston.

2. Method according to claim 1, applied to the manufacture of rack pistons, this piston comprising a rack (6, 46) fast to the stem (3, 43) and arranged longitudinally with respect to the axis (XX') of the head (2, 42) characterized by starting from a profiled element (10, 50) a wing (3a) of which bears teeth (14, 51) whose profile corresponds to that of the teeth of the rack (6, 46).

3. Method according to claim 2, characterized in that to enable the production of a double piston, the following operations are carried out :

— starting from a tubular profiled element (10) of substantially rectangular cross-section, one of the inner surfaces of this tube bearing teeth (14) designed to constitute the teeth of the rack (6) ;

— after having cut off a slice (1a) of this profiled element, machining this slice (1a) by turning on the axis (XX') parallel to the longitudinal direction of the rack (6), so as to constitute a piston head (2) in each wing adjacent to that bearing the teeth (14).

4. Method according to claim 2, characterized in that in order to manufacture two single pistons, it comprises the following steps :

— starting from a profiled element (50) having substantially the shape of a rectangular tube two opposite wings of which bear teeth (51) on their inner surfaces ; and

— after having cut off a slice, machining this slice by turning on the axis (XX') parallel to the longitudinal direction of the racks (46), so as to constitute a piston head (42) with each wing not bearing teeth (51),

— cutting the part obtained, transversely to the axis of turning, at two places diagonally opposite, to separate from each head (42) one of the adjacent wings (43) bearing a rack (46).

5. Method according to claim 4, characterized in that it comprises the following steps :

— starting from a profiled element (50) having externally two diagonaly opposite grooves (52), and situated respectively on a wing (43) provided with teeth (51) and close to a ridge ; and

— after turning, sawing the turned part along these grooves (52) in order to separate the pistons.

6. Method according to one of claims 4 or 5, characterized in that, after turning, at least one blind hole is formed from the outer surface of the wing (43) provided with teeth (51), and at the end thereof opposite the head (42) intended to be associated with said wing, and a guide shoe (47) of plastic material is force-fitted into this blind hole.

7. Method according to one of claims 2 to 6, characterized in that after turning, three blind holes are formed on the periphery of each head (42), and a guide shoe (20) of plastics material is force-fitted into each of these holes.

8. Method according to claim 3, characterized in that after turning, three blind holes distributed close to each head (2, 42) are formed from the outer surfaces of the wing (3, 43) bearing the teeth (14, 51) and of the opposite wing, and in that a guide shoe (20) of plastics material is force-fitted into each of these blind holes.

9. Method according to one of claims 2 to 8, characterized in that after turning, the lateral edges (18) of each rack are machined by milling, in a plane transverse to its teeth (14, 51), to remove flash therefrom.

10. Method according to one of claims 1 to 9, characterized in that in the course of turning, the periphery of each head (2, 42) is given a greater diameter than the wings (3, 43) transverse to the heads (2, 42).

11. Method according to one of claims 1 to 10, characterized in that on the front surface of each head, a cylindrical recess (24) is machined.

12. Piston manufactured notably according to a method as claimed in one of claims 1 to 11, said piston comprising a head (2, 42) to which is rigidly connected a transmission member (3, 43) extending transversaly to the head and carrying a rack (6, 46) whose teeth (14, 51) are transverse to the axis (XX') of the head, characterized in that the rack (6, 46) forms a single profiled part with the transmission member (3, 43) and the head (2, 42) and in that the teeth (14, 51) of the rack (6, 46) are extrusion blanks.

13. Piston manufactured notably according to a method as claimed in one of claims 1 to 3, said piston comprising two opposite heads (2) connected together by two spacers (3) of which one bears a rack (6) whose teeth, transverse to the axis (XX') of the heads (2), are directed towards the other spacer (3), characterized in that the rack (6) forms a single profiled part with the heads (2) and the spacers (3).

## Ansprüche

1. Verfahren zur Herstellung eines Kolbens, insbesondere zur Betätigung von Ventilen und dgl., wobei der Kolben wenigstens einen Kopf (2, 42) und wenigstens ein Übertragungselement (3, 43) enthält, das sich transversal in bezug auf den Kopf (2, 42) erstreckt, dadurch gekennzeichnet, daß ausgegangen wird von einem Stabprofil (10, 50), dessen Profil im wesentlichen dasjenige des Kolbens einhüllt, daß dieses Profil (10, 50) in Scheiben (1a) zerschnitten wird, wobei die Breite jeder Scheibe (1a) wenigstens gleich dem maximalen Durchmesser des Kolbens ist, und daß das Material der Scheibe (1a) des Profilteils (10, 50), welches in bezug auf das für den Kolben angestrebte Profil übersteht, durch Bearbeitung entfernt wird.

2. Verfahren nach Anspruch 1, angewendet auf die Herstellung von Zahnstangen-Kolben, wobei dieser Kolben eine Zahnstange (6, 46) umfaßt, die fest mit dem Übertragungselement (3, 43) verbunden und in Längsrichtung in bezug auf die Achse (XX') des Kopfes (2, 42) angeordnet ist, dadurch gekennzeichnet, daß ausgegangen wird von einem Profilteil (10, 50), dessen einer Schenkel (3a) Zähne (14, 51) trägt, deren Profil demjenigen der Zähne der Zahnstange (6, 46) entspricht.

3. Verfahren nach Anspruch 2, dadurch gekennzeichnet, daß zur Verwirklichung eines Doppelkolbens folgende Arbeitsschritte vorgenommen werden :

— ausgegangen wird von einem rohrförmigen Profilteil (10) allgemein rechtwinkeligen Querschnitts, wobei die eine Innenfläche dieses Rohres Zähne (14) trägt, die zur Bildung der Zähne der Zahnstange (6) bestimmt sind ;

— nach Abschneiden einer Scheibe (1a) dieses Profilteils wird diese Scheibe (1a) durch Abdrehen um eine Achse (XX'), die parallel zur Längsrichtung der Zahnstange (6) ist, so bearbeitet, daß in jedem Schenkel, der an den die Zähne (14) tragenden Schenkel angrenzt, ein Kolbenkopf (2) gebildet wird.

4. Verfahren nach Anspruch 2, dadurch gekennzeichnet, daß es zur Herstellung von zwei Einfachkolben folgende Arbeitsschritte umfaßt :

— ausgegangen wird von einem Profilteil (50), das im wesentlichen die Form eines rechtwinkeligen Rohres aufweist, dessen zwei einander gegenüberliegende Schenkel auf ihren Innenflächen Zähne (51) tragen ; und

— nach Abschneiden einer Scheibe wird diese Scheibe durch Abdrehen um eine Achse (XX'), die parallel zur Längsrichtung der Zahnstangen (46) ist, so bearbeitet, daß mit jedem Schenkel, der keine Zähne (51) trägt, ein Kolbenkopf (42) gebildet wird ;

— das erhaltene Teil wird transversal zur Drehachse an zwei diagonal einander gegenüberliegenden Stellen zerschnitten, um von jedem Kopf (42) einen der angrenzenden Schenkel (43), der eine Zahnstange (46) trägt, abzutrennen.

5. Verfahren nach Anspruch 4, dadurch gekennzeichnet, daß es folgende Arbeitsschritte umfaßt :

— ausgegangen wird von einem Profilteil (50), das auf der Außenseite zwei diagonal einander gegenüberliegende Rillen (52) aufweist, die auf einem mit Zähnen (51) versehenen Schenkel (43) bzw. in der Nähe einer Kante liegen ; und

— nach dem Abdrehen wird das gedrehte Teil längs dieser Rillen (52) zersägt, um die Kolben zu trennen.

6. Verfahren nach Anspruch 4 oder 5, dadurch gekennzeichnet, daß nach dem Drehen an dem Ende des die Zähne (51) tragenden Schenkels (43), welches dem Kopf (42) gegenüberliegt, der mit diesem vereinigt werden soll, ausgehend von der Außenseite dieses Schenkels (43) wenigstens ein Sackloch angebracht wird, und daß in dieses Sackloch eine Führungskufe (47) aus Plastikwerkstoff eingepreßt wird.

7. Verfahren nach einem der Ansprüche 2 bis 6, dadurch gekennzeichnet, daß nach dem Drehen am Umfang jedes Kopfes (42) drei Sacklöcher angebracht werden und daß in jedes dieser Sacklöcher eine Führungskufe (20) aus Plastikmaterial eingepreßt wird.

8. Verfahren nach Anspruch 3, dadurch gekennzeichnet, daß nach dem Drehen ausgehend von den Außenflächen des Schenkels (3, 43), der die Zähne (14, 51) trägt, und des gegenüberliegenden Schenkels drei Sacklöcher angebracht werden, die in der Nähe jedes Kopfes (2, 42) verteilt sind, und daß in jedes dieser Sacklöcher eine Führungskufe (20) aus Plastikmaterial eingepreßt wird.

9. Verfahren nach einem der Ansprüche 2 bis 8, dadurch gekennzeichnet, daß nach dem Drehen die Seitenränder (18) jeder Zahnstange längs einer zu deren Zähnen (14, 51) transversalen Ebene durch Fräsen bearbeitet werden, um sie zu entgraten.

10. Verfahren nach einem der Ansprüche 1 bis 9, dadurch gekennzeichnet, daß beim Abdrehen dem Umfang jedes Kopfes (2, 42) ein Durchmesser gegeben wird, der größer ist als der der Schenkel (3, 43), die transversal zu den Köpfen (2, 42) sind.

11. Verfahren nach einem der Ansprüche 1 bis 10, dadurch gekennzeichnet, daß auf der Stirnfläche jedes Kopfes eine zylindrische Verstärkung (24) durch Bearbeitung gebildet wird.

12. Kolben, der insbesondere durch ein Verfahren nach einem der Ansprüche 1 bis 11 hergestellt ist, wobei dieser Kolben einen Kopf (2, 42) aufweist, mit dem ein sich zum Kopf transversal erstreckendes Übertragungselement (3, 43) starr verbunden ist, welches mit einer Zahnstange (6, 43) versehen ist, deren Zähne transversal zur Achse (XX') des Kopfes sind, dadurch gekennzeichnet, dass die Zahnstange (6, 46), das Übertragungselement (3, 43) und der Kopf (2, 42) aus einem einzigen profilierten Teil ausgebildet sind und dass die Zähne (14, 51) der Zahnstange (6, 46) nach Extrusion roh verblieben sind.

13. Kolben, der insbesondere durch ein Verfahren nach einem der Ansprüche 1 bis 3 hergestellt ist, wobei dieser Kolben zwei einander gegenüberliegende Köpfe (2) aufweist, die untereinander durch zwei Streben (3) verbunden sind, von denen eine eine Zahnstange (6) trägt, deren Zähne (14), die transversal zur Achse (XX') der Köpfe (2) sind, zu der anderen Strebe (3) hin gerichtet sind, dadurch gekennzeichnet, dass die Zahnstange (6), die Köpfe (2) und die Streben (3) aus einem einzigen profilierten Teil ausgebildet sind.

0 022 688

FIG.2

FIG.1

FIG.3

FIG.4

1

## FIG. 5

## FIG. 6

## FIG. 7

## FIG. 8

## FIG. 9

FIG_10

FIG_11

FIG_12

FIG_14

FIG_15

FIG_13

FIG_16

4